# NEW EUROPEAN PATENT SPECIFICATION

(11) **EP 0 731 244 B2**
(45) Date of publication and mention of the opposition decision: **29.06.2011**
(45) Mention of the grant of the patent: 26.02.2003
(21) Application number: 96200618.5
(22) Date of filing: 07.03.1996
(51) Int. Cl.: E05C 1/00, B60J 1/14

(54) **Mobile accommodation and window for use therein**
Mobilheim und Fenster zur Verwendung in diesem Mobilheim
Logement mobile et fenêtre pour y être utilisée

(30) Priority: 07.03.1995 NL 9500457
(43) Date of publication of application: 11.09.1996
(73) Proprietor: POLYPLASTIC B.V., 3044 CK Rotterdam (NL)
(72) Inventor: 't Hoen, Jan, NL-3123 CN Schiedam (NL)
(74) Representative: Jilderda, Anne Ayolt

(56) References cited:
- EP-A- 0 014 029
- EP-B1- 0 517 561
- DE-B- 1 265 608
- DE-U1- 9 101 846
- GB-A- 2 169 953
- US-A- 4 120 524
- US-A- 4 638 598

## Description

The invention relates to a caravan, camper, or boat comprising a vertical wall which accommodates a movable panel which is provided with fittings to enable an opening and closing of said panel, a member of said fittings being connected to said panel.

In a mobile accommodation such as a caravan, camper, boat, or the like, windows made from a suitable synthetic, often acrylate-based resin material are mostly used, possibly double-walled, possibly transparent, provided with the necessary fittings such as casement fasteners and locks. The manufacturer of the mobile accommodation often leaves the manufacture of the windows to a supplier, in which case the windows should in general be delivered in such a state that they can be mounted without any work having to be carried out on the windows themselves, for reasons of manufacturing efficiency. This means that the fittings necessary for the window must be mounted to the window by the window manufacturer, and the window itself is delivered complete with fasteners, locks, and the like.

A disadvantage of such a procedure is, however, that the preliminary mounting of the fittings renders the windows more voluminous, so that the windows can be packed less densely together. This is very uneconomical in shipment and leads to an increase in the transport cost. In addition, projecting parts of the fittings increase the risk of scratches and other damage caused by the windows among themselves, so that more care is needed in packaging of the windows.

The invention has for its object to provide a caravan, camper, or boat of the kind mentioned in the opening paragraph with a window which can be mounted complete with its fittings without appreciable delay in the manufacturing process of the accommodation, but which does not entail the disadvantages mentioned above, or at least to a much lesser degree.

According to the invention, a caravan, camper, or boat of the kind mentioned in the opening paragraph is for this purpose characterized in that said member comprises an adaptor part which is fixed to said panel and has a main surface which is substantially parallel to said panel, in that said member comprises a fittings part which is slidingly received by said adaptor part in a lateral direction substantially parallel to said main surface and which is connected to said adaptor part at said main surface by means of quick coupling means which enable a mutual cooperation between said adaptor part and said fittings part such that a connection can be manually effected between them.

It is now possible to deliver the fittings, such as casement fasteners and locks, separately from the panel to the manufacturer of the caravan, camper, or boat, while the panel provided with the adaptor part need not or scarcely be of a larger volume and is accordingly much less voluminous than before. The transport cost is reduced thereby and the packaging requires less attention. Nevertheless, the maker of the mobile accommodation can fit the window without carrying out additional operations on the window. The fittings may in fact be manually mounted quickly and easily to an dapter part pre-assembled with the window. The manufacturing time of the mobile accommodation is thus not or substantially not influenced.

The invention is based on the recognition that, although a quick coupling assembly with the window itself is not feasible on account of an insufficient dimensional accuracy of the window, such a quick coupling is nevertheless possible through the interposition of the adaptor part. The adaptor part is mounted to the window during the manufacture of the latter in a manner which is comparatively insensitive to thickness variations of the window material, for example, by means of screws, rivets, or the like, or by means of a glued joint, while it can be manufactured, as can the window fastening part, in a batch process with sufficient dimensional accuracy for rendering possible a quick coupling assembly therewith.

It is noted that from British patent application GB 2.169.953 a mobile accommodation is in itself known comprising a window with a window stay having two parts, one part being connected to the window and the other part being connected to a window frame or like construction. The part connected to the window in this known assembly extends transversely across from the window and is connected to the other part through a pivot assembly. The constituent parts of the stay of this known accommodation, especially the part directly mounted to the window, all extend transversely across from the window and as such are unsuitable for pre-mounting like the adaptor part according to the invention. Rather the entire stay is completely assembled at one time and fixed to the window.

A preferred embodiment of the invention is characterized in that the quick coupling means comprise at least one snap connection element on the one part of said member, which is movable against a spring pressure, and ridges or openings on the other part of said member enabling a snap connection between both parts of said member. The parts may be readily snapped into one another with such quick coupling means, while a play-free connection can be realized through an accurate mutual positioning of the snap connection elements and the ridges or openings. The window fastening part is mounted and fixed in a single operation in that case.

To facilitate the mounting of especially adjustable casement fasteners further, such a fastener is preferably also fastened to the wall of the caravan, camper, or boat by means of a quick coupling.

A first special embodiment of the device according to the invention is characterized in that the quick coupling means comprise an axial slot in the one part and a mating flange on the other part, which flange is received with exact or clamping fit in the slot so as to effect a connection between them. The adaptor part and the fittings part may in that case be simply passed into one another for securing the fittings. This requires hardly any time at all. If so desired, the parts may be locked together by means of, for example, a screw, a locking pin or similar locking means, but this does involve an additional operation.

This is why a snap connection is preferred here, which provides a fastening as well as a fixation of the parts to one another in a single operation.

A further embodiment of the device according to the invention is characterized in that the adaptor part comprises a U-shaped rail section which is provided with snap tags in its bottom or wall.

A second special embodiment of the caravan, camper, or boat according to the invention is characterized in that the quick coupling means comprise a profiled cavity in the one part and a mating profiled projection on the other part which are capable of mutual cooperation through snapping together. Again the quick coupling between the two parts is realized through snapping together of the parts. The dimensional accuracy of the two parts can be sufficiently guaranteed in mass manufacture for ensuring a satisfactory quick coupling thereof.

The invention will now be explained in more detail with reference to four embodiments and the accompanying drawing, in which:
- Figure 1: is a perspective view of a first embodiment of the device according to the invention in which a window is provided with a casement fastener whose arm is shown shortened for greater clarity;
- Figure 2: is a perspective view of a strip with a locking stud of the fastener shown in figure 1 aligned with the adaptor part immediately before they are interconnected;
- Figure 3: is a cross-section taken on III-III in figure 2 of the strip with locking stud and the adaptor part in the interconnected state;
- Figure 4: is a perspective view of a second embodiment of the device according to the invention;
- Figure 5: shows a detail of the fastening of the adaptor part of figure 4;
- Figure 6: is a cross-section of the device of figure 4;
- Figures 7 to 9: show a third embodiment of the device according to the invention, being a modification of the first embodiment; and
- Figures 10, 11: show a fourth embodiment of the device according to the invention, being a modification of the second embodiment.
The figures are purely diagrammatic and not drawn true to scale. Some dimensions have been particularly exaggerated for the sake of clarity. Corresponding parts have been given the same reference numerals as much as possible in the drawings.

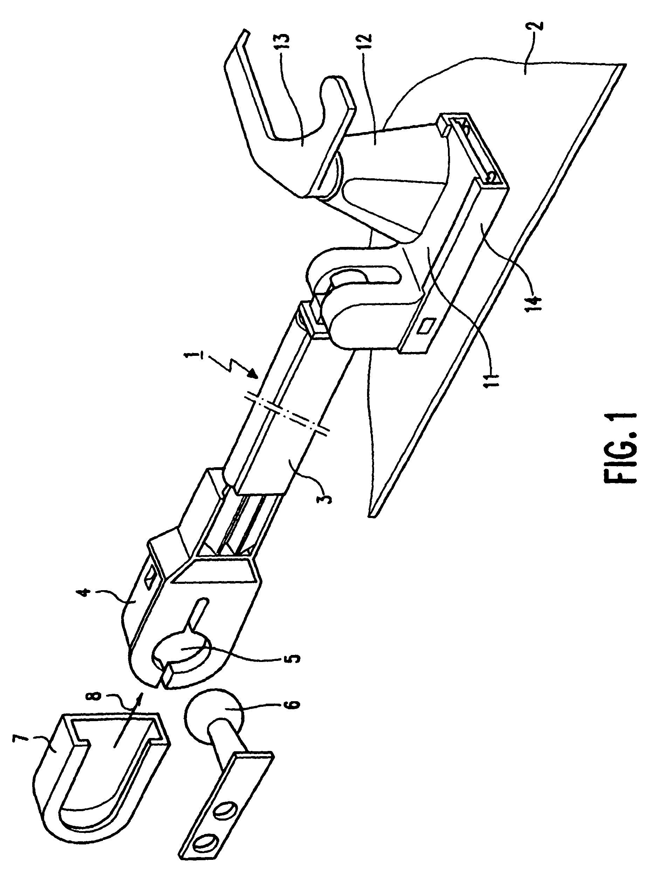

In figure 1, a casement fastener 1 is fastened to a window 2 of a mobile accommodation such as a caravan or camper. A fastening construction is used for this in conformity with the present invention. The casement fastener 1 has an arm 3 whose length is adjustable and of which only a portion is depicted in figure 1 for the sake of clarity. At one end of the arm 3 there is a head 4 which can be pivotably connected to the wall of the camper or caravan. The head 4 has a bowl-shaped recess 5 by means of which the head 4 can be pivotably connected to a coupling member 6 fastened to the wall of the accommodation. The coupling member 6 can be enclosed in the recess 5 in that a cover 7 is pulled in the direction of an arrow 8 over the head 4 after the latter has been pressed onto the coupling member 6, whereupon it cannot be removed therefrom anymore.

At the other end of the arm 3 of the casement fastener 1 there is a strip 11 with a locking stud 12 in which a locking handle 13 is pivotably fastened. The strip 11 is connected to an adaptor part 14, previously securely fastened to the window 2, by means of a snap connection. The way in which this connection between the adaptor part 14 and the casement fastener 1 is effected will be explained below.

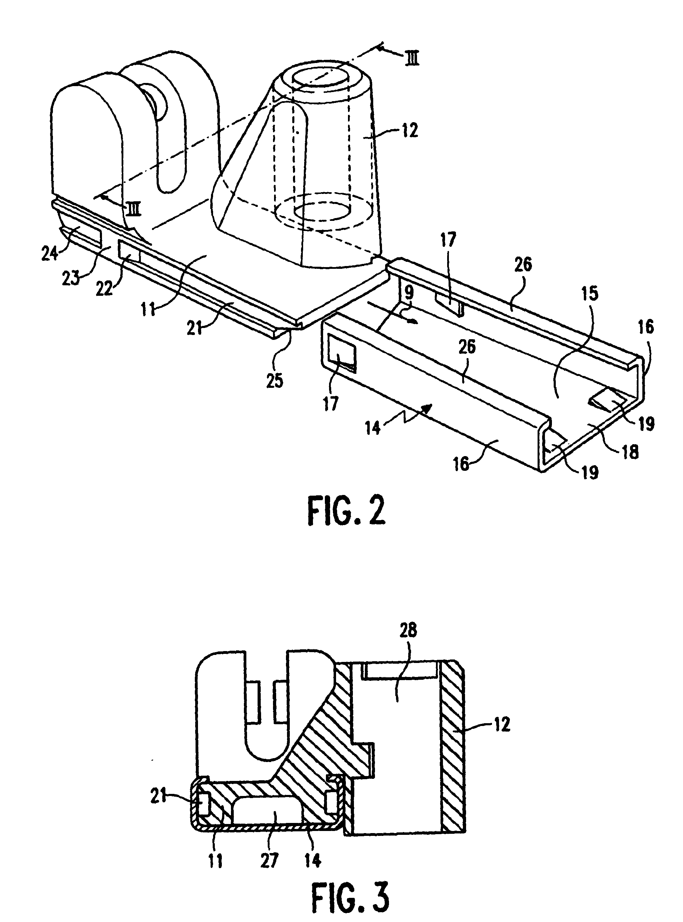

Figure 2 shows the strip 11 with the locking stud 12 and the adaptor part 14 which is to be mounted to the window beforehand. The strip 11 and the adaptor part 14 are mutually so positioned that the strip 11 can be passed into the adaptor part 14 in the direction of arrow 9 so as to achieve an interconnection. The adaptor part in its present embodiment comprises for this purpose an axial passage 9 which in this embodiment is formed by a U-shaped rail section whose upright walls 16 are provided with stamped-out snap tags 17. Snap tags 19 are in addition provided in the bottom 18 of the passage; their function will be explained further below.

Such an adaptor part can be manufactured, for example, from metal, for example from stainless steel, or alternatively, for example, from a suitable synthetic material, in which case the tags provided thereon may be formed in an (injection) moulding process. The adaptor part 14 may be fastened in advance to the window 2, for example with screws or rivets which are passed through holes (not shown) provided in the bottom 18.

When the strip is passed into the adaptor part 14 in the direction of the arrow 9, the ends of the snap tags 17 will slide through grooves 21 in the strip 11. The snap tags 17 are pressed outward by outward sloping groove portions 22 of the strip 11 at the end of this movement in the direction of the arrow 9. The snap tags 17 then snap resiliently inwards upon passing ridges 23. The snap tags accordingly rest in the grooves 24 of the strip 11 at the end of the movement in the direction of the arrow 9. The cooperation between the ridges 23 of the strip and the tags 17 of the adaptor part 14 prevents the strip from being moved back against the direction of the arrow 9. It is possible, however, to press the snap tags 17 towards the walls 16 of the adaptor part 17 from the outside by means of a tool, so that the mutual engagement of the snap connection elements and the ridges is lifted and the strip 11 can be moved from the adaptor part 14 against the direction of the arrow 9.

After the tags 17 have snapped behind the ridges 23, a further movement in the direction of the arrow 9 is prevented by a cooperation between the stamped-out tags 19 in the bottom 18 of the passage 15 and an abutment surface 25 of the strip 11. The resilience of the tags 19 and the sloping edge of the abutment surface 25 presses the strip 11 against the flanged rims 26 of the walls 16, whereby a play-free connection is realized.

Figure 3 shows in cross-section how the strip 11 with locking stud 12 is connected to the adaptor part 14 which has the form of a U-shaped rail section. The cavity 27 offers space to, for example, rivet or screw heads used for fastening the adaptor part 14 to the window 2. A locking handle 13 may be inserted with rotation possibility in hole 28 in usual manner. A strip 11 with locking stud 12 according to this configuration may be readily manufactured by injection moulding.

It is apparent from figures 1 to 3 that the adaptor part 14 occupies considerably less space than the strip 11 with locking stud 12 and locking handle 13. This implies a substantial saving in transport volume and accordingly a cost reduction. Furthermore, no measures are necessary anymore for preventing the adjustable arm 3, which is usually fastened to the window 2 so as to be freely rotatable, from damaging the window 2 or other windows in the same packaging during transport. The arm with the head 4 and the strip 11 can now in fact be delivered separately.

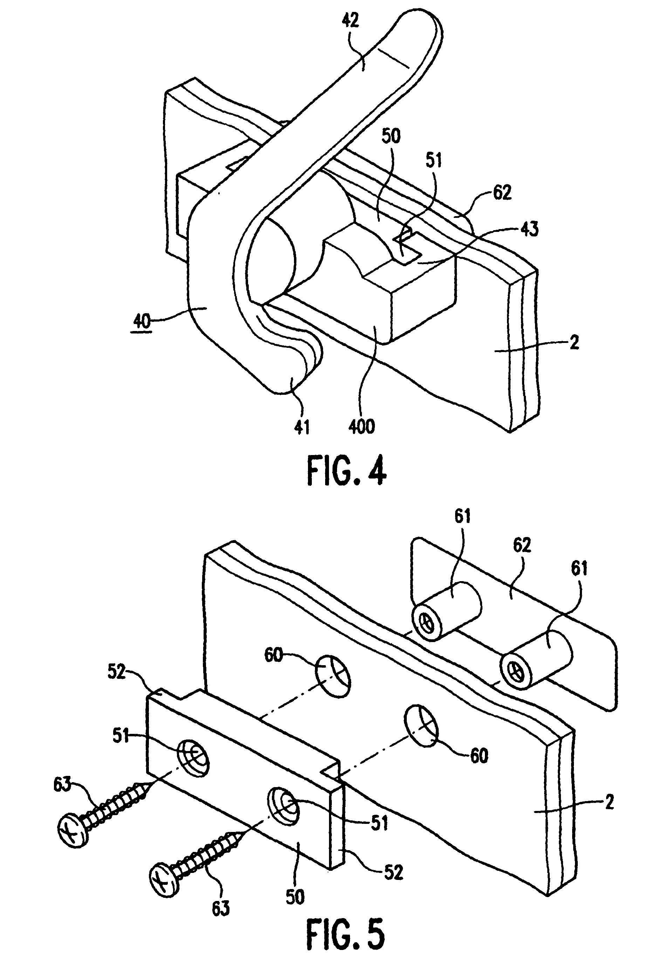

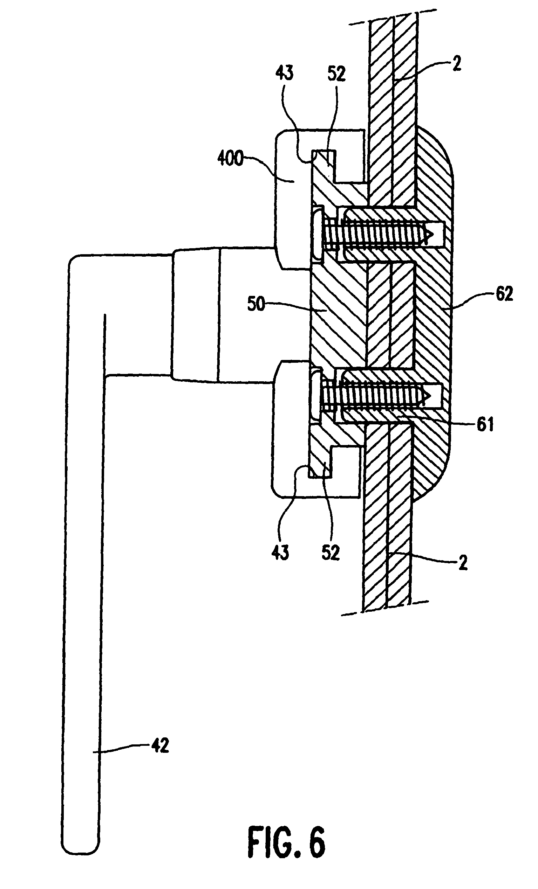

A second embodiment of the device according to the invention is shown in figures 4 to 6. The window fastening part 400 here comprises a lock 40 with which the window can be secured in the closed state. The pawl 41 of the lock handle 42 then clamps itself in a lock receptacle or behind a catch in or on the window frame. In this case, too, the window fastening part 400 is fastened to the window 2, which is double-walled here, by means of an adaptor part 50.

The adaptor part 50 is fastened to the window 2 beforehand. A conventional screw connection may be used for this. Suitable bores 60 are provided for this purpose in the window 2 so as to receive two bushes 61 of a cover plate 62. Not only does the opaque cover plate hide the screw connection from view from the outside, but it also achieves an enhanced (tensile) strength amply sufficient for withstanding usual loads acting on the window fittings. To fasten the adaptor part 50, suitable screws 63 are screwed into the bushes 61 through holes 51 provided for the purpose in the adaptor part and through the bores 60. The screws 63 are screwed home into the bushes 61 until the adaptor part 50 rests tightly and immovably against the window 2. It will be obvious that such a fastening is comparatively insensitive to thickness variations in the plate material of the windowpane 2. Since the adaptor part 50 is comparatively flat, individual windows 2 provided therewith can nevertheless be densely packed together without an appreciable increase in the risk of damage caused by windows mutually. The transport and packaging costs of individual windows are thus not or substantially not increased thanks to the flat shape of the adaptor part.

The adaptor part 50 comprises a flange 52 which is accommodated with close fit in a mating axial slot 43 of the lock. To fasten the lock 40 to the window 2, therefore, it suffices to pass the lock with its slot 43 over the flange 52. If so desired, a screw, locking pin or the like may be inserted through the slot and the flange for fixing these parts to one another. This is found to be not necessary in practice, however, if a sufficiently accurate dimensioning is provided so that the lock is securely clamped around the flange.

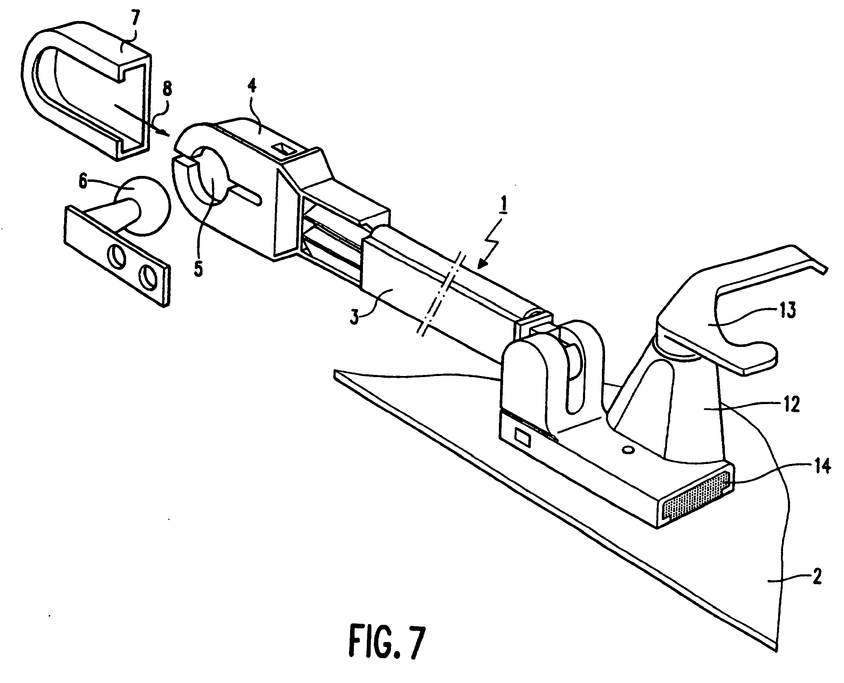

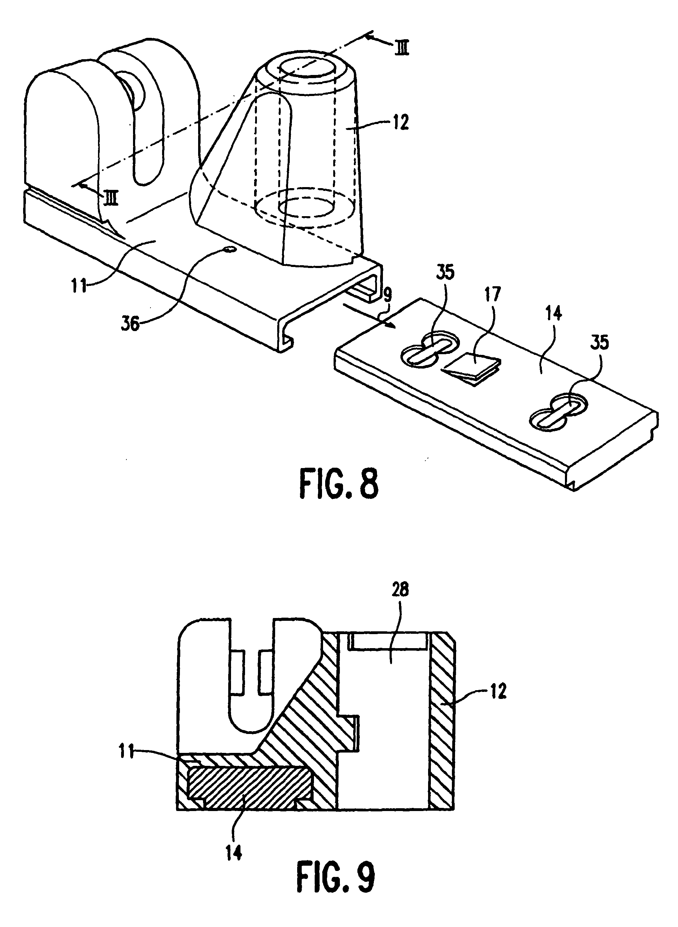

A third embodiment of the device according to the invention is depicted in figures 7 to 9 and consists of a modification of the first embodiment of the device according to the invention explained with reference to figures 1 to 3. This embodiment differs from the first through a different design of the adaptor part 14 and a corresponding adaptation of the strip 11 with locking stud 12. The adaptor part 14 is provided with slotted holes 35 or normal round bores by means of which it can be securely fastened to the window with conventional screw means. The mutual fixation of the strip 11 and the adaptor part 14 is provided by snap connection elements in the form of one or several snap tags 17 on the adaptor part 14 and a mating, complementary cavity or recess in the inner wall of the strip 11. The strip has a small opening 36 at the area of the cavity so that the snap tag 17 can be pressed in with a pin or other tool from the outside, if so desired, whereupon the two parts 11, 14 can be separated again. In the final step in the window assembly, the strip 11 is passed over the adaptor part 14 and snapped home thereon by means of the snap connection element 17.

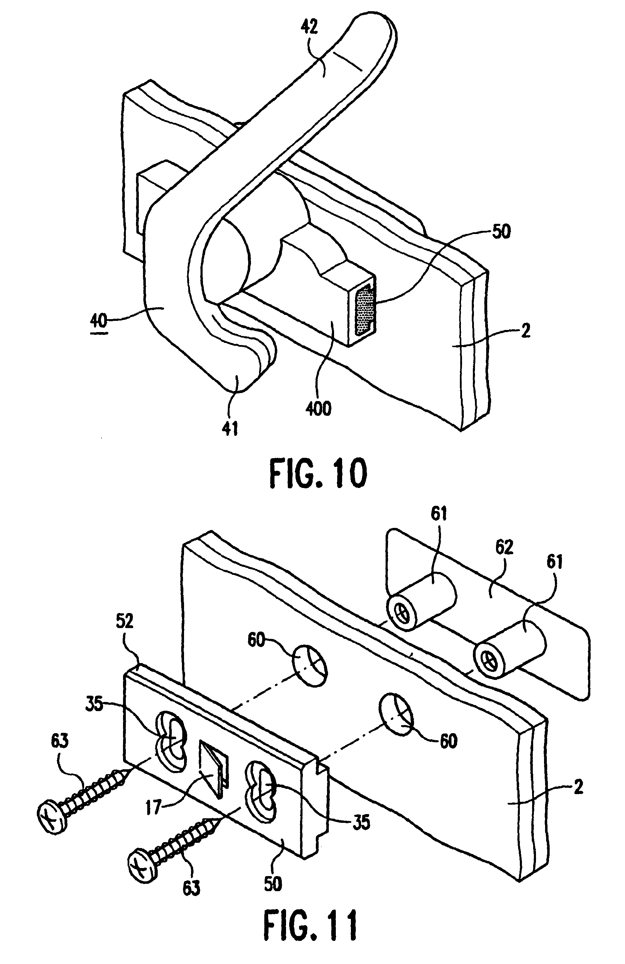

A fourth embodiment of the device according to the invention is shown in figures 10 and 11 and consists of a modification of the second embodiment of the device according to the invention explained with reference to figures 4 to 6. The adaptor part 50 on which this embodiment is based is identical to that of the third embodiment. The flange 52 of the adaptor part 50 thus shaped projects over a base portion of the adaptor part in a direction transverse to that of the second embodiment. As is shown in figure 10, the window fastening part 400 with the lock 40 is adapted accordingly. The window fastening part 400 is passed over the adaptor part 50 and snapped home thereon by means of the snap connection element 17 as described with reference to the third embodiment. Here, too, an opening is provided in the inner wall of the window fastening part 400 at the area of a complementary recess or cavity so that the snap connection element 17 remains accessible for possible future dismantling.

Although the invention was explained in detail above with reference to no more than four embodiments, it will be obvious that the invention is by no means limited to the examples given. Indeed, many more variations and modified designs are possible to those skilled in the art without departing from the scope of the invention as defined by the claims. Thus, for example, snap connection elements may be used in the second embodiment also for fixing the two parts to one another without play. The adaptor part may alternatively be immovably mounted to the window by gluing or welding, for example, instead of a conventional screw or rivet connection. It is in particular possible to use ultrasonic welding for achieving an at least substantially play-free fastening. Such a technology has the additional advantage that it can be readily automated.

Furthermore, the quick coupling between the window fastening part and the adaptor part may be realized in a number of alternative ways. Thus, in particular, the quick coupling means may comprise an internally profiled cavity in the one part and an equally profiled projection on the other part which can be brought into mutual engagement so as to achieve a snap or locking connection between them.

The invention is furthermore not limited to window casement fasteners, locks and hinges, but may be equally well applied to other fittingelements. The word "window" should be given a wide interpretation within the scope of the invention as defined by the claims such that it covers not only transparent panes but also opaque panels, traps and doors, which may or may not be double-walled. Generally speaking, the present invention provides caravan, camper, or boat, comprising an adjustable panel caravan, camper, or boat which, thanks to the previous mounting thereon of an adaptor part, can be quickly and easily provided with the necessary fittings without the packing density of the individual windows being substantially impaired thereby.

## Claims

1. A camper, caravan or boat, comprising a vertical wall which accommodates a movable panel which is provided with fittings to enable an opening and closing of said panel (2), a member of said fittings (1,400) being connected to said panel, **characterized in that** said member comprises an adaptor part (14,50) which is fixed to said panel (2) and has a main surface which is substantially parallel to said panel, and **in that** said member comprises a fittings part (11,40) whkh is slidingly received by said adaptor part in a lateral direction substantially parallel to said main surface and which is connected to said adaptor part at said main surface by means of quick coupling means (17,19,23,43,52) which enable a mutual cooperation between said adaptor part and said fittings part such that a connection is manually effected between them.

2. A camper, caravan or boat as claimed in claim 1, **characterized in that** the quick coupling means comprise at least one snap connection element (17,19) on the one part of said member, which is movable against a spring pressure, and ridges or openings (23) on the other part of said member enabling a snap connection between both parts of said member.

3. A camper, caravan or boat as claimed in claim 1 or 2, **characterized in that** the quick coupling means comprise an axial slot in the one part (43) of said member and a mating flange (52) on the other part of said member, which flange is received with exact or clamping fit in the slot so as to effect a connection between them.

4. A camper, caravan or boat as claimed in claim 3, **characterized in that** said adaptor part of said member comprises a U-shaped rail section which is provided with snap tags (17,19) in at least one of its walls.

5. A camper, caravan or boat as claimed in claim 1 or 2, **characterized in that** the quick coupling means comprise a profiled cavity in the one part of said member and a mating profiled projection on the other part of said member which are capable of mutual cooperation through snapping together.

## Patentansprüche

1. Campingwagen, Caravan oder Boot, mit einer vertikalen Wand, die eine bewegliche Platte aufnimmt, die mit einem Beschlag versehen ist, um ein Öffnen und Schließen der Platte (2) zu ermöglichen, wobei ein Element des Beschlages (1, 400) mit der Platte verbunden ist, **dadurch gekennzeichnet, dass** das Element ein Adapterteil (14, 50) aufweist, das mit der Platte (2) verbunden ist und eine Hauptfläche besitzt, die im Wesentlichen parallel zu der Platte ist, dass das Element ein Beschlagteil (11, 40) aufweist, das mit dem Adapterteil an der Hauptfläche mit Hilfe eines Schnellkupplungsmittels (17, 19, 23, 43, 52) verbunden ist, das ein gemeinschaftliches Zusammenwirken zwischen dem Adapterteil und dem Beschlagteil derart ermöglicht, dass eine Verbindung dazwischen manuell hergestellt werden kann.

2. Campingwagen, Caravan oder Boot nach Anspruch 1, **dadurch gekennzeichnet, dass** das Schnellkupplungsmittel wenigstens ein Schnappverbindungselement (17, 19) an einem der beiden Elemente aufweist, das gegen einen Federdruck beweglich ist, und wobei Vertiefungen oder Öffnungen (23) auf dem anderen Teil des Elementes eine Schnappverbindung zwischen beiden Teilen des Elementes ermöglichen.

3. Campingwagen, Caravan oder Boot nach Anspruch 1 oder 2, **dadurch gekennzeichnet, dass** das Schnellkupplungsmittel einen axialen Schlitz an dem einen Teil (43) des Elementes und einen angepassten Flansch (52) an dem anderen Teil des Elementes aufweist, wobei der Flansch mit einer exakten oder mit einer Presspassung in dem Schlitz aufgenommen ist, um so eine Verbindung dazwischen zu bewirken.

4. Campingwagen, Caravan oder Boot nach Anspruch 3, **dadurch gekennzeichnet, dass** das Adapterteil des Elementes einen U-förmigen Schienenabschnitt aufweist, der mit Schnappenden (17, 19) an wenigstens einer seiner Wände versehen ist.

5. Campingwagen, Caravan oder Boot nach Anspruch 1 oder 2, **dadurch gekennzeichnet, dass** das Schnellkupplungsmittel einen profilierten Hohlraum an dem einen Teil des Elementes und einen angepassten profilierten Vorsprung an dem anderen Teil des Elementes aufweist, die durch ein Zusammenschnappen miteinander zusammenwirken können.

## Revendications

1. Equipement mobile comprenant une paroi verticale qui reçoit un panneau mobile qui est munie de fixations pour permettre une ouverture et une fermeture dudit panneau (2), un élément desdites fixations (1, 400) étant relié au dit panneau, **caractérisé en ce que** ledit élément comprend une pièce d'adaptateur (14, 50) qui est reliée au dit panneau (2) et possède une surface principale qui est sensiblement parallèle au dit panneau, **en ce que** ledit élément comprend une pièce de fixation (11, 40) qui est reliée à ladite pièce d'adaptateur au niveau de ladite surface principale à l'aide d'un moyen d'accouplement rapide (17, 19, 23, 43, 52) qui permet une coopération mutuelle entre ladite pièce d'adaptateur et ladite pièce de fixation de telle sorte qu'un raccordement puisse être effectué manuellement entre elles.

2. Equipement mobile selon la revendication 1, **caractérisé en ce que** le moyen d'accouplement rapide comprend au moins un élément de raccordement à encliquetage (17, 19) sur une partie dudit élément, qui est mobile contre une pression de ressort, et des saillies ou ouvertures (23) sur l'autre partie dudit élément permettant un raccordement à encliquetage entre les deux parties dudit élément.

3. Equipement mobile selon la revendication 1 ou 2, **caractérisé en ce que** le moyen d'accouplement rapide comprend une encoche axiale sur une partie (43) dudit élément et une contre-bride (52) sur l'autre partie dudit élément, dont la bride est reçue avec un ajustement exact ou serré dans l'encoche de manière à effectuer un raccordement entre elles.

4. Equipement mobile selon la revendication 3, **caractérisé en ce que** ladite pièce d'adaptateur dudit élément comprend une section de rail en forme de U qui est munie de pattes d'encliquetage (17, 19) dans au moins l'une de ses parois.

5. Equipement mobile selon la revendication 1 ou 2, **caractérisé en ce que** le moyen d'accouplement rapide comprend une cavité profilée dans une partie dudit élément et une saillie profilée de raccordement sur l'autre partie dudit élément qui sont capables de coopération mutuelle par le biais d'un encliquetage l'une avec l'autre.
